# EUROPÄISCHE PATENTSCHRIFT

(11) **EP 0 459 069 B1**
(45) Veröffentlichungstag und Bekanntmachung des Hinweises auf die Patenterteilung: **25.01.1995**
(21) Anmeldenummer: 90810494.6
(22) Anmeldetag: 29.06.1990
(51) Int. Cl.: G01L 1/16, G01L 5/16

(54) **Zwischenlage-Kraftsensor mit parallelgeschalteten Scheibenmesselementen und integrierten Verstärkern**
Intermediate layer force sensor with parallel connected disc sensor elements and integrated amplifiers
Palpeur de force à couche intermédiaire avec des éléments de mesure à disque connectés en parallèle et amplificateurs intégrés

(30) Priorität: 31.05.1990 CH 1840/90
(43) Veröffentlichungstag der Anmeldung: 04.12.1991
(73) Patentinhaber: K.K. HOLDING AG, CH-8408 Winterthur (CH)
(72) Erfinder: Sonderegger, Hans-Conrad, CH-8413 Neftenbach (CH); Giorgetta, Mario, CH-8408 Winterthur (CH); Wolfer, Peter, CH-8450 Kleinandelfingen (CH)

(56) Entgegenhaltungen:
- AT-B- 295 191
- AT-B- 309 852
- DE-C- 3 440 670
- GB-A- 2 212 616

## Beschreibung

Die Erfindung bezieht sich auf einen Zwischenlage-Sensor mit kraftmässig parallelgeschalteten Messelementen gemäss Oberbegriff des Hauptanspruches, die in kraft- und momentübertragende Maschinenteile eingebaut werden. Haupterfordernis solcher Sensoren ist deren Ausgestaltung als möglichst dünne Scheiben oder Platten, damit sie die Einbauverhältnisse möglichst wenig verändern.
Hauptbedingung solcher Anordnungen ist die zeitlich konstante Aufteilung der Gesamtkraft, die durch die Platte geleitet wird in eine kleinere durch die Kraftsensoren geleitete Messkraft und eine im Nebenschluss geschaltete Ergänzungskraft.

Ein solcher Sensor ist unter DE 34 40 670 C2 bekannt geworden. In diesen Messplatten sind handelsübliche Kraftmesselemente eingeklebt, deren sehr empfindliche Einbauhöhen gegenüber der Messplattenoberfläche mittels Adapterplatten und Druckscheiben auf wenige um genau eingestellt werden müssen. Konsequenz dieser Hintereinanderschaltung einer Reihe von Scheiben, wovon üblicherweise fünf schon in den handelsüblichen Kraftmesselementen vorhanden sind, ist eine grosse Unsicherheit in der Kraftübertragung durch Parallelschaltung dieser Elemente, weil beispielsweise acht hintereinandergeschaltete Scheiben zusammen mit den Auflageflächen zehn Spaltfederschichten ergeben, die je nach Vorspannung verschiedene Elastizitätsverhältnisse aufweisen.

Somit werden die einzelnen Kraftmesselemente, die in einer solchen Messplatte angeordnet sind, infolge der zehn Luftspalte verschiedene Kraftsignale abgeben, da die Grösse der Luftspalte schwer unter Kontrolle zu bringen ist. Zudem ist die Plattendicke infolge des Einbaus von handelsüblichen Kraftmesselementen und der notwendigen Adapter- und Druckscheiben auf ein Minimalmass von 10 bis 12 mm beschränkt.

Zweck der Erfindung ist es, eine zeitlich konstante Aufteilung der Gesamtkraft, die durch die Platte geleitet wird, in eine kleinere durch die Kraftsensoren geleitete Messkraft und eine im Nebenschluss geschaltete Ergänzungskraft, zu erreichen. Zudem sollen zur Einstellung der Kraftaufteilung keine zusätzlichen Adapterplatten und Druckscheiben erforderlich und die Messplatten wesentlich dünner sein. Die Montage soll einfacher sein. Das Ziel wird dadurch erreicht, dass die aus Scheiben bestehenden Messelemente unter hoher mechanischer Vorspannung eingeschweisst sind und zudem die Sensoroberfläche zwecks Planheit überschliffen ist, wodurch die Spaltfederwirkung vermindert wird, und dass die Messelemente gemeinsam mit den Ladungsverstärkern und weiteren Elektronik-Einheiten eine Montageeinheit bilden. Mit dieser erfindungsgemässen Kombination eröffnen sich neue Einbau- und Ueberwachungsmöglichkeiten zu wirtschaftlichen Kosten und mit einheitlichen und konstanten Signalverhältnissen der einzelnen Kraftmesselemente.

Die Erfindung bezieht sich in erster Linie auf piezoelektrische Kraftmessanordnungen, die mit Ladungsverstärkern zusammenarbeiten. Als Piezomaterial wird üblicherweise Quarzkristall Si0₂ verwendet, welcher Messvorgänge von bis zu 15 Min. Dauer mit nur 1 bis 2% Signalverlust ermöglicht, wodurch einwandfreie statische Kalibrierung erreichbar ist. Verwendung von Piezokeramiken ist in gewissen Fällen dort interessant, wo grössere Signale nötig sind und wo die quasistatische Messung nicht von Bedeutung ist. Weil Quarzplatten je nach Kristallschnitt sowohl auf Druck wie auch auf Schub beansprucht werden können, hat sich Quarz jedoch als das ideale Material für die Mehrkomponenten-Kraftmessung erwiesen.

Die Erfindung kann jedoch auch auf andere bekannte Sensortechniken aufbauen. So ist es denkbar, dass Dünn- und DickfilmVerfahren, ev. auch kapazitive Verfahren angewendet werden. Allerdings wird nur das piezoelektrische Prinzip die erforderliche Steifigkeit gegenüber einer parallelgeschalteten Vollmetallplatte ermöglichen.

Die folgenden Ausführungen beziehen sich deshalb ausschliesslich auf piezoelektrische Anordnungen.

Die Erfindung soll anhand folgender Figuren näher erläutert werden:
- Fig. 1: zeigt einen eingebauten Zwischenlage-Plattensensor in Scheibenform mit in der Scheibenbohrung angeordneter Ladungsverstärkeranordnung
- Fig. 2: zeigt einen Schnitt E-E gemäss Fig. 4
- Fig. 3: zeigt einen Grundriss von Fig. 2
- Fig. 4: zeigt den Grundriss nach A-A von Fig. 1
- Fig. 5: zeigt die Schweissanordnung des Messelementes
- Fig. 6: zeigt eine Variante von Fig. 2
- Fig. 7: zeigt ein Messelement
- Fig. 8: zeigt ein Messelement
- Fig. 9: zeigt eine Einbauanordnung für die Messung von vier Komponenten mit Drehmoment
- Fig. 10: zeigt den Grundriss von Fig. 9
- Fig. 11: zeigt einen Zwischenlageplatten-Sensor in Rechteckform mit eingebauter Verstärkeranordnung
- Fig. 12: zeigt den Querschnitt nach Fig. 11
- Fig. 13: zeigt einen Querschnitt mit auf den Messelementen aufgedampften Metallschichten 'S'

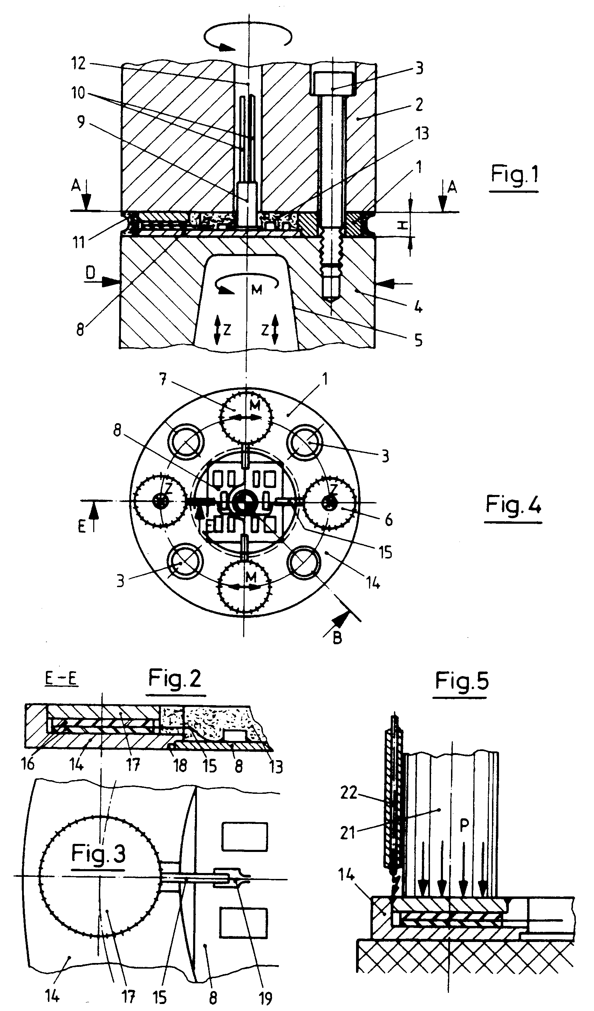

Fig. 1 zeigt einen erfindungsgemässen Zwischenlage-Sensor in Ringscheibenform 1, eingebaut in eine Antriebswelle 2, z.B. einer Bohrmaschine. Gewünscht wird die Messung der Achsialkraft Z und des Antriebsmomentes M. Es könnten aber auch andere Kraftkomponenten gewählt werden, wie später gezeigt werden soll. Zwischen Antriebswelle 2 und Werkzeugträgerwelle 4 ist der Zwischenlage-Sensor 1 mittels Schrauben 3 so vorgespannt eingebaut, dass die Kraftübertragung nahezu derjenigen einer vollen Stahlscheibe entspricht. Um die Einbauverhältnisse der Maschine möglichst wenig verändern zu müssen, ist die Dicke H des Zwischenlage-Sensors 1 möglichst gering, z.B. etwa 1/10 von D oder wenige mm.

Nach Fig. 4 besteht der Zwischenlage-Sensor 1 aus einer Metallscheibe 14, in welcher mindestens ein scheibenförmiges Messelement 6 eingebaut ist. Ueblicherweise werden jedoch eine Reihe von scheibenförmigen Messelementen 6, 7 über den Umfang verteilt eingebaut.

Je nach Kristallschnitt bestehen die Messelemente 6, 7 aus Druck- oder Z-kraft-Elementen 6 oder aus Schubkraft-Elementen 7, womit Z-, X-, Y-Kräfte oder Momente M gemessen werden können, je nach Orientierung der Empfindlichkeitsachsen der Kristalle. In der Scheibenbohrung ist der Verstärker 8 eingebaut, an dem die Signalelektroden 15 der Messelemente 6, 7 direkt angeschlossen sind. In der zentralen Anschlussmuffe 9 sind die Speiseleitungen und die Signalleitungen 10 gefasst, die im Kabelkanal 12 zur nicht dargestellten Signalübertragung führen.

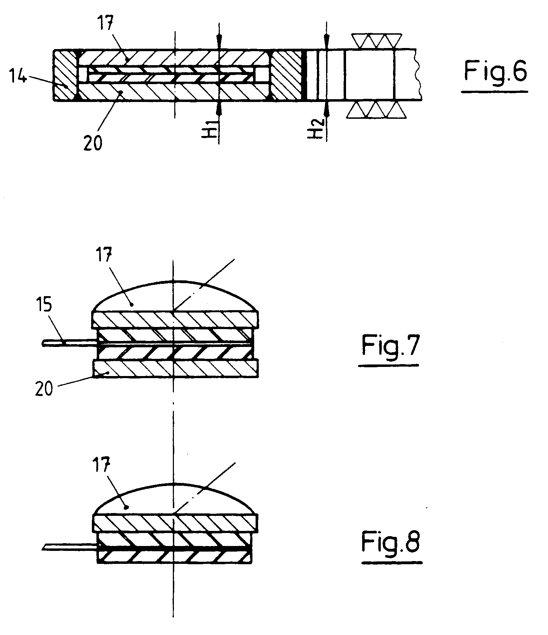

Fig. 2 zeigt ein Detail nach Schnitt E-E von Fig. 4. Nach dieser Variante weist die Metallscheibe 14 eine Sacklochöffnung auf, in welcher ein Messelement nach Fig. 8 eingebaut ist. Der Ladungsverstärker 8 wird in einer Eindrehung 18 der Metallringscheibe 14 gehaltert. Die Signalelektrode 15, die zwischen den Kristallscheiben 16 angeordnet ist, führt zur entsprechenden Anschlussstelle 19 auf dem Ladungsverstärker 8.

Fig. 3 stellt den Grundriss von Fig. 2 dar. Die Metallringscheibe 14 ist mit der Metalldeckscheibe 17 verschweisst.

Fig. 4, bereits oben erwähnt, zeigt die Montage-Einheit bestehend aus Metallringscheibe 14 und dem eingebauten Ladungsverstärker 8, auf dem die Signalelektroden 15 direkt angeschlossen sind. Die ganze Anordnung wird mit einer Ausgussmasse 13 luftdicht abgeschlossen und kann somit auf einfache Weise eingebaut werden, da keine hochisolierenden Leitungen oder Anschlüsse erstellt werden müssen. Der Anwender kann den hochempfindlichen Sensor ohne weiteres selber einbauen. Der Ladungsverstärker 8 kann aber auch auf andere Weise angeschlossen werden. Vorspannschrauben 3 können direkt durch die Metallringscheibe 14 geführt werden.

Fig. 5 zeigt in einem Ausschnitt, wie die Messzelle nach Fig. 8 in die Metallscheibe 14 eingeschweisst wird. Dazu wird das Messelement mittels Pressstempel 21 unter hohe mechanische Spannung P gesetzt, um dann mittels Laserschweissfaser 22 mit der Metallscheibe 14 verschweisst zu werden. Es kann aber auch eine andere Schweisstechnik vorgesehen werden.

Nach Fig. 6 haben Deckscheibe 17 und untere Deckscheibe 20 etwas Uebermass, worauf nach Einschweissung beide Oberflächen überschliffen bzw. in einer Zweischeiben-Läppmaschine plangeläppt werden (vvv).
Weil die Deckscheiben aus demselben Material wie die Metallringscheibe 14 bestehen, sind die Masse H1 und H2 absolut gleich, dh. der Schleif- oder Läpp-Prozess entfernt auf der Metallscheibe 14 und auf den Metalldeckscheiben 17 genau gleich dicke Materialschichten.

Fig. 7 zeigt ein Messelement für Durchgangsbohrung. Diese Ausführungsform wurde in Fig. 6 angewendet.

Fig. 8 zeigt ein Messelement für Sacklochbohrung. Diese Ausführungsform wurde in Fig. 2 angewendet. Ueblicherweise werden zwei Kristall- resp. Keramikscheiben 16 vorgesehen, zwischen denen die Signalelektrode 15 montiert ist. Die Anordnung von nur einer Piezoscheibe ist ebenfalls möglich. Die Signalelektrode liegt dann zwischen einer Isolierscheibe und der Piezoscheibe.

Für beide Messelementtypen können entweder Druck- oder Schub-kristalle eingesetzt werden. Kristall- und Metallteile der Messelemente nach Fig. 7 und 8 werden zu einer Montageeinheit fusioniert, wodurch geringste Spaltfederwirkung und einfache Montage gewährleistet ist. Es kann aber auch Klebung gewählt werden.

Ob die Metallscheibe 14 mit Durchgangsbohrung nach Fig. 6 oder mit Sacklochbohrung nach Fig. 2 ausgerüstet wird, oder ob nur eine Piezoscheibe angewendet wird, ist eine Konstruktionswahl. Jede Möglichkeit folgt demselben Hauptprinzip.

Erfindungsgemäss von Bedeutung ist, dass die Messelemente 6, 7 unter hoher mechanischer Vorspannung eingeschweisst werden. Hierauf werden sie ein- oder beidseitig, je nachdem Elemente nach Fig. 7 oder nach Fig. 8 eingebaut wurden, überschliffen und geläppt. Auf diese Weise und unter Verwendung von fusionierten oder geklebten Messelementen ist die Zielsetzung der Reduktion der vielfachen Spaltfederwirkung erreichbar. Mit solchen Messelementen können zuverlässige Messresultate über eine lange Zeit erwartet werden.

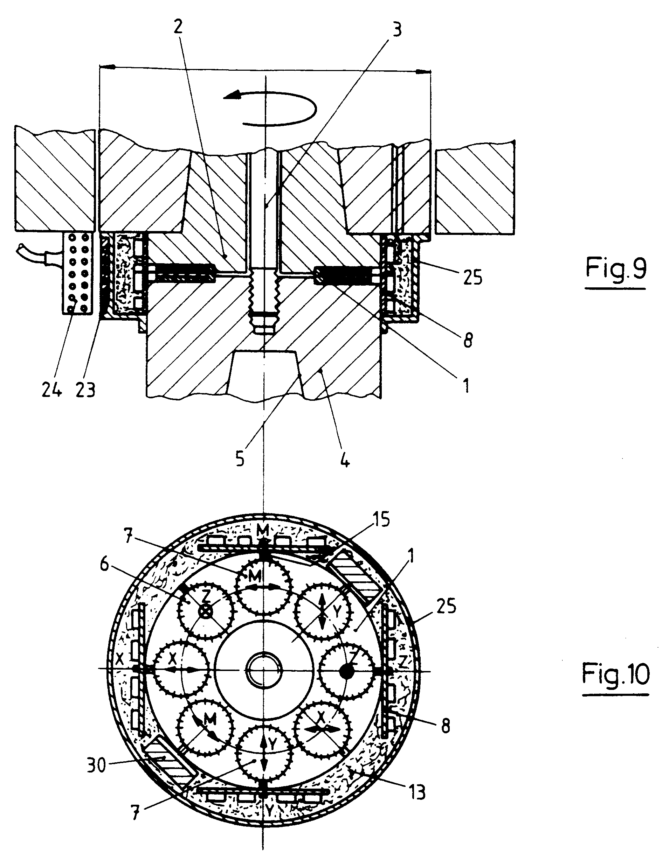

Fig. 9 und 10 zeigen ein komplettes Anwendungsbeispiel eines Zwischenlage-Sensors mit integrierter Verstärkerelektronik und digitaler induktiver Signalabführung (Fig. 10: Grundriss von Fig. 9). Es können natürlich auch andere drahtlose Übertragungsmittel eingesetzt werden.

Der Zwischenlage-Sensor 1 ist z.B. mittels Vorspannschraube 3 zwischen Antriebswelle 2 und Werkzeugträgerwelle 4 so eingespannt, dass sowohl die Kraftkomponenten X, Y, Z wie auch die Antriebsmomente M vollständig über den Zwischenlage-Sensor 1 geleitet werden. Für jeden der vier Messwerte sind je zwei symmetrisch angeordnete Messelemente vorgesehen, total zwei für Druckkräfte Z und sechs für Schubkräfte und Momente X, Y und M. Entsprechend sind vier Ladungsverstärker 8 notwendig, welche tangential angeordnet und im ringförmigen Elektronikgehäuse 25 gehaltert und vergossen sind.

Dieses Elektronikgehäuse 25 kann mit der rotierenden Signalinduktionsspule 23 ausgerüstet sein. Zusätzlich sind weitere Uebertragungselektronikteile 30 darin untergebracht. Die feststehende Signalinduktionsspule 24 ist auf der Maschinenführung montiert und enthält die Spannungszuführung wie auch die Signalabführung. Es ist aber auch möglich, die Signalabführung sowie die Spannungszuführung für die Ladungsverstärker 8 zentral am Ende der Antriebswelle 2 durch ein spezielles Uebertragungsgerät zu bewerkstelligen.

Erfindungsgemäss sind die Ladungsverstärker 8 so angeordnet, dass die Signalelektroden 15 direkt auf den Keramikplatten der Verstärker 8 angeschlossen werden können. Es sind aber auch andere Anschlussmöglichkeiten interessant.

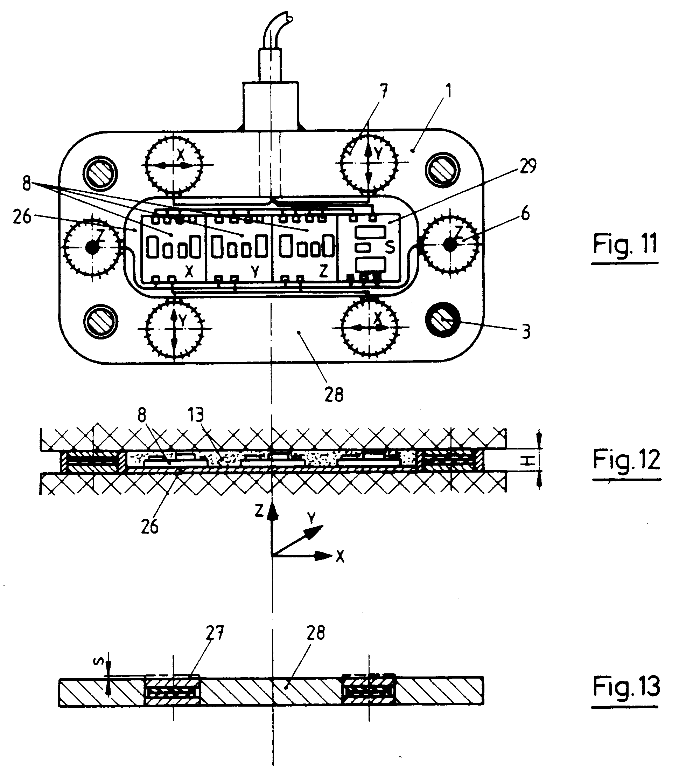

Fig. 11 zeigt einen rechteckförmig gehaltenen Zwischenlage-Sensor, bei dem die Ladungsverstärker 8 innerhalb der Kraftkontaktfläche angeordnet sind.

Das erfindungsgemässe Beispiel nach Fig. 11 und 12 zeigt sechs Messelemente, je zwei für die Raumkoordinaten X, Y und Z. Diese sind wiederum nach der erfindungsgemässen Anordnung unter hoher mechanischer Pressung in die Metallplatte 28 eingeschweisst (in Fig. 2 gezeigt), worauf die Platte 28 beidseitig überschliffen und geläppt wird.

In gewissen Anwendungsfällen mag es vorteilhaft sein, dass einzelne Messelemente eine höhere Belastung erhalten als andere, insbesondere, wenn kleine Kraftänderungen gemessen werden sollen.

In solchen Fällen wird entweder mit einer Schablone oder nach dem Fotolithoverfahren die Deckscheibe 17 der Messelemente 6, 7 mit einer Aufdampfschicht 27 der Dicke S versehen, welche eine genaue Funktion der Bedampfungszeit darstellt. Damit können auf der Basis der überschliffenen und geläppten Gesamtoberfläche sehr genau definierte Zusatzspannungen in den Messelementen 6, 7 erzeugt werden, ohne dass zusätzliche Scheiben oder Folien nötig sind, die weitere Luftspaltwirkungen in die Messelemente einbringen würden.

Den drei Ladungsverstärkern 8 -X, -Y und -Z wird vorteilhafterweise eine Speiseeinheit 29 vorgeschaltet, welche direkt an das normierte Spannungsnetz von 24 bis 36 V der Maschine angeschlossen werden kann. Ladungsverstärker und Speiseeinheit können Hybridtypen sein.

Anstelle von scheiben-, ring- oder rechteckförmigen Zwischenlage-Sensoren können Sensoren beliebiger Form gewählt werden. Diese Formen können den konstruktiven Gestaltungen der Maschinen angepasst sein.

Die Erfindung ermöglicht damit eine neue Kategorie von Zwischenlage-Sensoren, die besonders geeignet sind, Zerspanungskräfte, Nietkräfte, Pressenkräfte, Schweisskräfte in Werkzeugmaschinen und Robotern zu messen und insbesondere zu überwachen. Maschinen mit solchen Ueberwachungssensoren sind in der Lage, vollautomatisch zu arbeiten. Die piezoelektrische Messtechnik eignet sich hervorragend für die Mehrkomponenten-Kraftmessung. Nachteilig ist, dass sie quasistatisch misst, und dass hochisolierende Kabel zwischen Sensor und Ladungsverstärker notwendig sind. Dank neuentwickelter Ladungsverstärker, die um Faktoren kleiner sind als handelsübliche Ladungsverstärker, ist es erfindungsgemäss möglich geworden, piezoelektrische Sensoren und Ladungsverstärker zu einer Einheit zu vereinigen, sodass keine Verbindungskabel mehr notwendig sind. Damit wird die quasistatische Messmöglichkeit bei Verwendung von Quarz als Piezomaterial entscheidend verbessert.

Messungen solcher Kombinationen haben gezeigt, dass ein Sprungsignal von 10% FS (Full Scale) nach 5 Min. Krafteinwirkung weniger als 2% Drift anzeigt.

Nachdem in der Bearbeitungstechnik 95% der Arbeitszyklen weniger als 5 Minuten dauern, ist mit dieser erfindungsgemässen Sensortechnik ein breites Anwendungsfeld in der industriellen Messtechnik eröffnet.

Dank der sehr geringen Bauhöhe H von beispielsweise 6 bis 8 mm sind die erfindungsgemässen Zwischenlage-Sensoren leicht einbaubar und auf einfache Weise den geometrischen Anforderungen der Maschine anpassbar. Zudem verändern sie deren Stabilitätsstruktur nur unmerklich. Die Verwendung standardisierter Scheiben-Messelemente 6,7 und deren Einschweissung unter hohem mechanischem Druck sowie die Vermeidung von in Serie geschalteter Luftspalten, ferner die Möglichkeit des Direktanschlusses der Messelemente an Ladungsverstärker unter Vermeidung von Kabelverbindungen ergibt ein Zwischenlage-Sensorkonzept, das neue Möglichkeiten in der Bearbeitungstechnik und Robotik eröffnen wird.

### Titel-Benennungen

- 1: Zwischenlage-Sensor in Ringscheibenform
- 2: Antriebswelle
- 3: Vorspannschraube
- 4: Werkzeugträgerwelle
- 5: Werkzeug-Aufnahmekonus
- 6: Messelement für Z Kraft (Druck)
- 7: Messelement für M oder X, Y (Schub)
- 8: Ladungsverstärker
- 9: Zentral-Anschlussmuffe
- 10: Anschlusskabel, Speiseleitungen, Anschlussleitungen
- 11: Dichtring
- 12: Kabelkanal
- 13: Ausgussmasse
Z Achsialkraft
M Drehmoment
H Dicke des Zwischenlage-Sensors
D Durchmesser der Werkzugträgerwelle
- 14: Metallringscheibe, Ringscheibe, Sensorscheibe
- 15: Signalelektroden
- 16: Kristallscheiben
- 17: Metalldeckscheibe, Deckscheibe
- 18: Eindrehung
- 19: Anschlussstelle auf Ladungsverstärker
- 20: Untere Deckscheibe
- 21: Pressstempel
- 22: Laserschweissfaser
- 23: Rotierende Signalinduktionsspule
- 24: Feststehende Signalinduktionsspule
- 25: Elektronikgehäuse
- 26: Verteilerplatte
- 27: Aufdampfschicht
- 28: Metallplatte, Sensorplatte
- 29: Speiseeinheit
- 30: Uebertragungselektronik

## Patentansprüche

1. Zwischenlage-Sensor mit kraftmässig parallelgeschalteten scheibenförmigen Messelementen (6,7), die auf Druck- oder Schubkräfte empfindlich sind zum Einbau zwischen kraftübertragenden Maschinenteilen, dadurch gekennzeichnet, dass die Messelemente (6,7) unter mechanischer Vorspannung einzeln eingeschweisst sind, wodurch die Spaltfederung vermindert wird, und dass die Messelemente (6,7) gemeinsam mit Ladungsverstärkern (8) und weiteren Elektronik-Einheiten eine Montageeinheit bilden.

2. Zwischenlage-Sensor nach Anspruch 1, dadurch gekennzeichnet, dass er durch einen Vorspannbolzen (3), welcher die krafteinleitenden Maschinenteile (2,4) verbindet, vorgespannt ist.

3. Zwischenlage-Sensor nach einem der Ansprüche 1 und 2, dadurch gekennzeichnet, dass die Messelemente (6,7) auf piezoelektrischer Basis aufgebaut sind und Quarzkristallscheiben (16) verschiedenen Schnittrichtung enthalten, deren Signalelektroden (15) ohne Kabelverbindungen an Ladungsverstärker (8) angeschlossen sind.

4. Zwischenlage-Sensor nach einem der Ansprüche 1 und 2, dadurch gekennzeichnet, dass die Messelemente (6,7) auf piezoelektrischer Basis aufgebaut sind und Piezokeramikscheiben (16) in verschiedenen Orientierungsrichtungen enthalten, deren Signalelektroden (15) ohne Kabelverbindungen an Ladungsverstärker (8) angeschlossen sind.

5. Zwischenlage-Sensor nach einem der Ansprüche 1, 2, 3 und 4, dadurch gekennzeichnet, dass er Ringscheibenform hat, wobei die Elektronik-Anordnung bestehend aus Speiseteil (29) und Ladungsverstärker (8) in der Ringöffnung angeordnet sein kann und mit koaxialer Anschluss- und Signalleitung (9,10) ausgerüstet und als Montageeinheit gefertigt ist.

6. Zwischenlage-Sensor nach einem der Ansprüche 1 bis 5, dadurch gekennzeichnet, dass er Ringscheibenform hat, wobei die Verstärkeranordnung, bestehend aus Speiseteil (29) und Ladungsverstärker (8) innerhalb der Ringöffnung (18) angeordnet ist.

7. Zwischenlage-Sensor nach einem der Ansprüche 1 bis 5, dadurch gekennzeichnet, dass er Ringscheibenform hat, wobei die Verstärkeranordnung, bestehend aus Speiseteil (29) und Ladungsverstärker (8) ausserhalb der Ringscheibe tangential angeordnet und in einem ringförmigen Elektronikgehäuse (25) untergebracht ist.

8. Zwischenlage-Sensor nach einem der Ansprüchen 1 bis 7, dadurch gekennzeichnet, dass er Ringscheibenform hat, wobei die Verstärkeranordnung, bestehend aus Speiseteil (29) und Ladungsverstärker (8) ausserhalb der Ringscheibe tangential angeordnet ist, und dass ferner Umwandlungs- und Uebertragungselektronik (30) im ringförmigen Elektronikgehäuse (25) untergebracht sind mit Mitteln, um Energiezufuhr wie auch Signalübertragung kontaktfrei über beliebige Telemetriesysteme (23) zu übertragen.

9. Zwischenlage-Sensor nach einem der Ansprüchen 1 bis 4, dadurch gekennzeichnet, dass er eine rechteckige Form hat, wobei die Verstärkeranordnung, bestehend aus Speiseteil (29) und Ladungsverstärker (8) im Flanschinnenteil auf einer Verteilerplatte (26) angeordnet und mit den mechanischen Teilen des Zwischenlage-Sensors (1) zu einer Montageeinheit vergossen ist.

10. Zwischenlage-Sensor nach einem der Ansprüche 1 bis 9, dadurch gekennzeichnet, dass die Messelemente (6,7) mit einer Aufdampfschicht (27) von bestimmter Dicke 'S' versehen sind, um deren Kraftdurchleitungsanteil gegenüber der Platte (28) zu erhöhen.

11. Zwischenlage-Sensor nach einem der Ansprüche 1 bis 10, dadurch gekennzeichnet, dass die Messelemente (6,7) so orientiert sind, dass Mehrkomponentenkräfte X, Y und Z wie auch Drehmomente M erfassbar sind.

12. Zwischenlage-Sensor nach einem der Ansprüche 1 bis 11, dadurch gekennzeichnet, dass die Messelemente (6,7) aus zwei Kristallscheiben (16) und einer dazwischengelegten Signalelektrode (15) bestehen, die mit einer oder zwei Metalldeckscheiben (17, 20) zu einer Montageeinheit verbunden sind und damit geringe interne Spaltfederwirkung aufweisen.

13. Zwischenlage-Sensor nach einem der Ansprüche 1 bis 12, dadurch gekennzeichnet, dass die Sensorplatte (28) resp. -Scheibe (14) mit auf die Messelemente (6,7) abgestimmten Durchgangsbohrungen versehen ist, in welche die Messelemente (6,7) eingeschweisst sind.

14. Zwischenlage-Sensor nach einem der Ansprüche 1 bis 13, dadurch gekennzeichnet, dass die Sensorplatte (28) resp. -Scheibe (14) mit Sacklochbohrungen versehen ist, in welche die Messelemente (6,7) eingesetzt und verschweisst sind.

15. Zwischenlage-Sensor nach einem der Ansprüche 1 bis 14, dadurch gekennzeichnet, dass die Piezoanordnung aus einer Kristall- oder Keramikscheibe und einer Isolatorscheibe mit dazwischenliegender Elektrode (15) besteht.

## Claims

1. Interposed sensor with measuring elements (6, 7) paralleled forcewise and sensitive to pressure or shear forces, for fitting between force-transmitting machine parts, characterized by the measuring elements (6, 7) being welded in singly under mechanical preload so that the gap springing is reduced, and by the measuring elements (6, 7) forming one assembly together with the charge amplifiers (8) and other electronic units.

2. Interposed sensor according to Claim 1, characterized by a preloading screw (3) which joins the force-introducing machine parts and preloads the sensor.

3. Interposed sensor according to one of Claims 1 and 2, characterized by the measuring elements (6, 7) being based on piezoelectrics and containing quartz disks (16) cut in various directions, their signal electrodes (15) connected to charge amplifiers (8) without cables.

4. Interposed sensor according to one of Claims 1 and 2, characterized by the measuring elements (6, 7) being based on piezoelectrics and containing piezo-ceramic disks (16) with various orientations, their signal electrodes (15) connected to charge amplifiers (8).

5. Interposed sensor according to one of Claims 1, 2, 3 and 4, characterized by its annular form, whereby the electronics consisting of the power pack (29) and charge amplifier (8) can be placed in the bore of the annulus, and equipped with coaxial connection and signal lines (9, 10) to form an assembly unit.

6. Interposed sensor according to one of Claims 1 to 5, characterized by its annular form with the amplifier arrangement consisting of power pack (29) and charge amplifier (8) placed inside the bore (18) of the annulus.

7. Interposed sensor according to one of Claims 1 to 5, characterized by its annular form with the amplifier arrangement consisting of power pack (29) and charge amplifier (8) placed tangentially outside the annulus and accommodated in an annular electronics housing (25).

8. Interposed sensor according to one of Claims 1 to 7, characterized by its annular form with the amplifier arrangement consisting of power pack (29) and charge amplifier (8) placed tangentially outside the annulus, moreover by the accommodation of the transforming and transmission electronics (30) in an annular electronics housing (25) with means for supplying energy and transmitting signals contact-free over any telemetering systems (23).

9. Interposed sensor according to one of Claims 1 to 4, characterized by its rectangular form with the amplifier arrangement consisting of power pack (29) and charge amplifiers (8) placed inside the flange on a distribution plate (26) and sealed with the mechanical parts of the interposed sensor (1) to form an assembly unit.

10. Interposed sensor according to one of Claims 1 to 9, characterized by the measuring elements (6, 7) being provided with a vapour-deposited layer (27) of a certain thickness 'S' to increase the proportion of the force conducted compared with the plate (28).

11. Interposed sensor according to Claims 1 to 10, characterized by the measuring elements (6, 7) being oriented so that multicomponent forces X, Y and Z and also torques M can be detected.

12. Interposed sensor according to one of Claims 1 to 11, characterized by the measuring elements (6, 7) consisting of two crystal disks (16) and a signal electrode (15) located between them, joined with one or two metal cover disks (17, 20) to form an assembly unit so that little internal gap spring action is present.

13. Interposed sensor according to one of Claims 1 to 12, characterized by the sensor plate (28) or disk (14) as the case may be provided with a through hole matched to the measuring elements (6, 7) and into which the latter (6, 7) are welded.

14. Interposed sensor according to one of Claims 1 to 13, characterized by the sensor plate (28) or disk (14) as the case may be provided with blind holes, into which the measuring elements (6, 7) are inserted and welded.

15. Interposed sensor according to one of Claims 1 to 14, characterized by the piezoelectric arrangement consisting of a crystal or ceramic disk and an insulating disk with electrode (15) between these.

## Revendications

1. Capteur intercalaire à éléments de mesure en forme de disque connectés en parallèle quant au flux de force (6, 7) sensibles à la pression et au cisaillement, destiné à être installé entre des éléments de machine transmettant des efforts, caractérisé par le fait que les éléments de mesure (6, 7) sont, chacun, soudés séparément sous précontrainte mécanique ce qui réduit l'entrefer compressible et par le fait que les éléments de mesure (6, 7) constituent, avec les amplificateurs de charge (8) et les autres composants électroniques, un ensemble de montage compact.

2. Capteur intercalaire selon revendication de brevet 1 caractérisé par le fait qu'il est précontraint au moyen d'une vis de précontrainte (3) qui fixe les éléments de machine (2, 4) transmettant les efforts.

3. Capteur intercalaire selon l'une des revendications de brevet 1 et 2 caractérisé par le fait que les éléments de mesure de force (6, 7) sont basés sur le principe piézo-électrique et comportent des rondelles en cristal de quartz (16) à orientations de coupe différentes dont les électrodes de transmission du signal (15) sont connectées à l'amplificateur de charge (8) sans faire appel à un câble de liaison.

4. Capteur intercalaire selon l'une des revendications de brevet 1 et 2 caractérisé par le fait que les éléments de mesure reposent sur le principe piézo-électrique et comportent des rondelles en céramique piézique (16) coupées selon des plans d'orientation différentes dont les électrodes de sortie du signal sont connectées à l'amplificateur de charge sans câble de liaison.

5. Capteur intercalaire selon l'une des revendications de brevet 1, 2, 3 et 4 caractérisé par le fait qu'il a la forme d'une rondelle plate et que le circuit électronique comprenant la partie alimentation (29) et l'amplificateur de charge (8) peut être aménagée dans l'alésage central et constitue une unité compacte avec câble de liaison coaxial pour l'alimentation et la transmission du signal.

6. Capteur intercalaire selon l'une des revendications de brevet 1 à 5 caractérisé par le fait qu'il est en forme de rondelle, le circuit d'amplification comprenant la partie alimentation (29) et l'amplificateur de charge (8) étant aménagé dans l'alésage (18) de la rondelle.

7. Capteur intercalaire selon l'une des revendications de brevet 1 à 5 caractérisé par le fait qu'il a la forme d'une rondelle et que le circuit d'amplification comprenant la partie alimentation (29) et l'amplificateur de charge (8) est aménagé tangentiellement à l'extérieur de la rondelle dans un boîtier électronique (25) concentrique au capteur.

8. Capteur intercalaire selon l'une des revendications de brevet 1 à 7 caractérisé par le fait qu'il a la forme d'une rondelle et que l'aménagement d'amplification comprenant la partie alimentation (29) et l'amplificateur de charge (8) est disposé tangentiellement à l'extérieur de la rondelle et, qu'en outre, l'électronique de conversion et celle de transmission (30) sont intégrés dans un boitier électrique (25) comportant des moyens permettant de transmettre, sans contact, I'énergie d'alimentation et les signaux de mesure par quelque système de télémétrie que ce soit.

9. Capteur intercalaire selon l'une des revendications de brevet 1 à 4 caractérisé par le fait qu'il est de forme rectangulaire, l'aménagement d'amplification comprenant l'alimentation (29) et les amplificateurs de charge (8) étant disposé sur une plaque support (26) montée sur la bride interne et moulé d'une pièce avec la partie mécanique du capteur intercalaire (1).

10. Capteur intercalaire selon l'une des revendications de brevet 1 à 9 caractérisé par le fait que les éléments de mesure (6, 7) posèdent un revêtement appliqué en phase vapeur d'épaisseur "S" (27) qui augmente le coefficient de transmission de force par rapport à la plaque (28).

11. Capteur intercalaire selon l'une des revendications de brevet 1 à 10 caractérisé par le fait que les éléments de mesure (6, 7) sont orientés de manière à pouvoir enregistrer les composantes de force X, Y et Z ainsi que les moments M.

12. Capteur intercalaire selon l'une des revendications de brevet 1 à 11 caractérisé par le fait que les éléments de mesure (6, 7) sont constitués de deux rondelles en cristal (16), d'une électrode de transmission du signal intercalée (15) et d'une ou de deux plaques d'obturation formant ainsi une unité compacte ce qui permet de réduire l'effet d'entrefer compressible.

13. Capteur intercalaire selon l'une des revendications 1 à 12 caractérisé par le fait que la plaque-support d'éléments (28) respectivement la rondelle-support d'éléments (14) possède des trous de passage adaptés aux éléments de mesure et dans lesquels ces éléments de mesure sont soudés.

14. Capteur intercalaire selon l'une des revendications 1 à 13 caractérisé par le fait que la plaque-support (28) respectivement la rondelle-support (14) possède des trous borgnes dans lesquels sont placés et soudés les éléments de mesure (6, 7).

15. Capteur intercalaire selon revendications de brevet 1 à 14 caractérisé par le fait que l'aménagement piézique se compose d'une rondelle en cristal ou en céramique et d'une rondelle d'isolation entre lesquelles est placée l'électrode (15).
